# FASCICULE DE BREVET EUROPEEN

(11) **EP 3 144 038 B1**
(45) Date de publication et mention de la délivrance du brevet: **02.01.2019**
(21) Numéro de dépôt: 16187420.1
(22) Date de dépôt: 06.09.2016
(51) Int. Cl.: A63C 5/12, F16F 7/12, A63C 5/075, F16F 1/376, F16F 3/093

(54) **DISPOSITIF AMORTISSEUR DESTINÉ À ÊTRE MONTÉ SUR UNE PLANCHE DE GLISSE SUR NEIGE**
STOSSDÄMPFUNGSVORRICHTUNG ZUR MONTAGE AUF EINEM GLEITBRETT FÜR SCHNEE
DAMPING DEVICE INTENDED FOR BEING MOUNTED ON A GLIDEBOARD FOR SNOW

(30) Priorité: 21.09.2015 FR 1570042
(43) Date de publication de la demande: 22.03.2017
(73) Titulaire: Skis Rossignol, 38430 Saint Jean de Moirans (FR)
(72) Inventeur: MOENNE LOCCOZ, Arnaud, 38430 Moirans (FR)
(74) Mandataire: Cabinet Laurent & Charras

(56) Documents cités:
- EP-A1- 0 639 392
- EP-A1- 0 826 397
- EP-A2- 0 743 081
- US-A1- 2004 178 606

## Description

### Domaine technique

L'invention se rattache au domaine des sports de glisse sur neige, et plus spécifiquement celui du ski alpin ou du surf des neiges. Elle concerne plus spécifiquement des agencements particuliers destinés à assurer l'amortissement des mouvements de l'avant ou arrière d'une planche de glisse.

### Arrière-plan de l'invention

De manière générale, on sait qu'une planche de glisse est sujette à de nombreux phénomènes de vibrations. Ces vibrations sont dues au fait que la planche évolue sur une surface qui présente des irrégularités, qui font se relever l'extrémité de la planche du fait de sa relative souplesse. La gravité a quant à elle tendance à attirer l'extrémité de la planche vers le bas, provoquant donc des phénomènes oscillatoires. Ces phénomènes peuvent se prolonger plus ou moins dans le temps en fonction des propriétés mécaniques de la planche, et en particulier sa raideur et son amortissement.

On conçoit que ces phénomènes de battements ne sont pas propices à une bonne conduite de la planche, et il a donc été déjà proposé des dispositifs amortissants qui permettent de limiter l'amplitude, et surtout la durée des phénomènes vibratoires de l'extrémité avant de la planche.

Une solution intéressante a été proposée dans le document FR 1 407 710, qui décrit un ski équipé d'un système amortisseur comprenant un bras dont une extrémité est solidaire d'un point fixe de la zone avant du ski. La partie arrière de ce bras est solidaire d'un dispositif incluant un élément amortisseur, pouvant être constitué d'un plot en caoutchouc. Lors du mouvement de l'extrémité avant du ski, le bras rigide provoque la compression de l'élément en caoutchouc situé à l'extrémité opposée du bras. Toutefois, le principe décrit dans ce document ne permet pas d'optimiser les performances de l'amortisseur en termes d'amplitude de mouvement et de quantité d'énergie dissipée lors de la compression du matériau caoutchoutique. Une solution analogue décrite dans le document US2004/0178606 consiste à faire travailler le plot en caoutchouc en cisaillement, en lui donnant des formes facilitant la déformation de portions en excroissance. Toutefois, un tel comportement n'est pas totalement satisfaisant, car l'amortissement est relativement linéaire et non progressif.

### Exposé de l'invention

Il existe donc le besoin de définir d'une manière plus précise les propriétés d'amortissement de l'élément compressible de ce type de dispositif, en recherchant une dissipation d'énergie suffisante pour obtenir un taux d'amortissement approprié et progressif, et ce malgré une course limitée, de l'ordre de quelques dizaines de millimètres.

Pour ce faire, le Demandeur a conçu un dispositif amortisseur destiné à être monté sur une planche de glisse, comportant un organe mobile relié un mécanisme de transmission des efforts générés lors de la déformation de la planche, et qui inclut une pièce en un matériau viscoélastique déformable.

Conformément à l'invention, ce dispositif se caractérise en ce que la pièce en matériau viscoélastique présente une forme dont la section selon un plan transversal varie longitudinalement de manière alternativement croissante et décroissante, formant des creux et des crêtes. La distance entre creux et/ou la distance entre crêtes varie lors de la déformation de cette pièce.

En d'autres termes, l'élément amortisseur présente une succession de zones de fort et de faible diamètre, formant des creux et les crêtes et des ondulations de section, en forme générale d'accordéon.

Autrement dit, l'invention consiste à utiliser en tant qu'élément amortisseur une pièce qui présente une géométrie de soufflet, de telle sorte que lors de sa compression, on constate non seulement des phénomènes de cisaillement à l'intérieur du matériau, mais également une déformation des différents soufflets pouvant aller jusqu'au comblement quasi total des espaces entre deux crêtes successives. Cette géométrie permet d'obtenir un élément qui présente une raideur plus faible qu'un élément à géométrie pleine, qui est non linéaire et qui est le siège de phénomènes de cisaillement, et génère donc une dissipation d'énergie et par conséquent un amortissement, qui sont accrus.

La géométrie de la pièce peut se décliner de différentes manières, en particulier en ce qui concerne la forme des zones séparant des extremums de diamètre. Ainsi, dans une première variante, il est possible d'employer une géométrie dans laquelle la section varie de manière linéaire entre deux extremums, formant donc un profil longitudinal de type en dents de scie. En variante, il est également possible que certaines portions ne soient pas strictement coniques, ou rectiligne en section, mais adoptent une certaine courbure, imposée notamment pour des raisons de fabrication et de moulage de la pièce caractéristique.

En pratique, dans une forme privilégiée de réalisation, la pièce caractéristique peut être de révolution, de manière à avoir un comportement mécanique homogène lors de la compression ou la détente. Cette pièce peut également comporter un canal central traversé par un élément du mécanisme de transmission en forme de tringle. Ce canal ou évidement central permet au mécanisme de transmission de pouvoir prendre appui sur la face de la pièce en matériau viscoélastique qui est opposée au point fixe du dispositif amortisseur.

Les paramètres géométriques de la pièce caractéristique peuvent également se décliner par le choix des dimensions extérieure et intérieure et la profondeur des créneaux. Ainsi, dans une première forme de réalisation, le rapport entre le diamètre extérieur minimal de la pièce caractéristique et le diamètre du canal central est compris entre 1,5mm et 2mm. Ce rapport permet, pour un encombrement global constant, de régler la quantité de matière viscoélastique, et donc la performance globale d'amortissement.

Complémentairement, on peut concevoir la pièce caractéristique en choisissant que le rapport entre le diamètre extérieur maximal et le diamètre extérieur minimal de la pièce soit compris entre 1,25 mm et 2 mm. Ce rapport permet de déterminer la profondeur des créneaux générés sur la face extérieure de la pièce caractéristique, et influe donc sur le taux de compression maximal, sur la déformation progressive longitudinale de cette pièce, et sur la non-linéarité de la raideur, et par conséquent, à quantité de matière équivalente, sur les performances d'amortissement.

Les performances d'amortissement peuvent également se régler par le choix du matériau viscoélastique, et en particulier sa dureté. En pratique, on privilégiera pour un bon amortissement des matériaux dont la dureté Shore est comprise entre 60 et 90 Shore A.

Dans une forme avantageuse, le dispositif selon l'invention peut comporter une seconde pièce en un matériau viscoélastique, dont la dureté est différente de la dureté de la première pièce viscoélastique. Autrement dit, le dispositif amortisseur présente des comportements différents en fonction du déplacement du mécanisme de transmission associée. Ainsi, la première pièce peut se déformer lors de la flexion de la planche de glisse, tandis que la seconde pièce peut se déformer lors de la contre flexion de la planche.

Le choix des duretés respectives des deux pièces caractéristiques permet de d'influer sur le comportement de la planche. Dans une première forme de réalisation, la pièce en matériau viscoélastique se déformant lors de la flexion de la planche présente une dureté inférieure à celle de la pièce à matériau viscoélastique se déformant lors de la contre flexion de la planche. Ainsi, le choix d'un matériau moins dur pour la première pièce, comprimé lors de la flexion de la planche permet une grande déformation de l'extrémité de la planche, tout en apportant un amortissement plus important des mouvements de montée de l'extrémité de la planche. A l'inverse, en ce qui concerne le mouvement opposé, conduisant l'extrémité de la planche à se rapprocher du sol, il est préférable qu'il soit de plus faible amplitude et également moins amorti, ce qui est obtenu par l'utilisation d'une seconde pièce plus dure.. Cela permet à la planche de retrouver au plus vite son état non déformé.

En pratique, on a obtenu un bon comportement avec une première pièce en un matériau présentant une dureté comprise entre 60 et 90 Shore A, de préférence voisine de 80 Shore A, permettant des déplacements de la tige qui comprime cette première pièce jusqu'à 8 mm environ. A l'inverse, la seconde pièce présente une dureté plus élevée, supérieure à 60 Shore D, conduisant à des déplacements de la tige de l'ordre du millimètre.

Avantageusement en pratique, le dispositif peut comporter un boîtier à l'intérieur duquel sont disposées les pièces en matériau viscoélastique. Ce boîtier peut comporter une zone transparente à l'aplomb des pièces caractéristiques, de manière à permettre de visualiser les déformations liées aux mouvements de flexion et contre flexion.

### Description sommaire des figures

La manière de réaliser l'invention, ainsi que les avantages qui en découlent, ressortiront bien de la description des modes de réalisation qui suivent, à l'appui des figures annexées dans lesquelles
- la figure 1 est une vue en perspective sommaire et partielle d'un ski équipé du dispositif amortisseur conforme à l'invention, incluant le mécanisme de transmission des efforts ;
- la figure 2 est une vue en coupe longitudinale horizontale du dispositif de la figure 1 ;
- la figure 3 est une vue en perspective sommaire de la pièce en matériau viscoélastique intégrée dans le dispositif de la figure 1 ;
- la figure 4 est une vue en coupe longitudinale de la pièce de la figure 3 ;
- les figures 5 et 6 sont des vues en coupe transversale de la pièce des figures 3 et 4, selon les plans V-V' et VI-VI' de la figure 4 respectivement ;
- la figure 7 est une vue en coupe longitudinale verticale de la partie du dispositif de la figure 1 dans lequel sont intégrées deux pièces en matériau viscoélastique ;
- la figure 8 est une vue en perspective sommaire montrant les éléments de la figure 7 séparée et avant assemblage ;
- les figures 9, 10 et 11 sont des vues en coupe longitudinale verticale du dispositif de la figure 1 montré dans des positions correspondant respectivement de repos, de mouvement de flèche et de mouvement de contre flèche

### Description détaillée

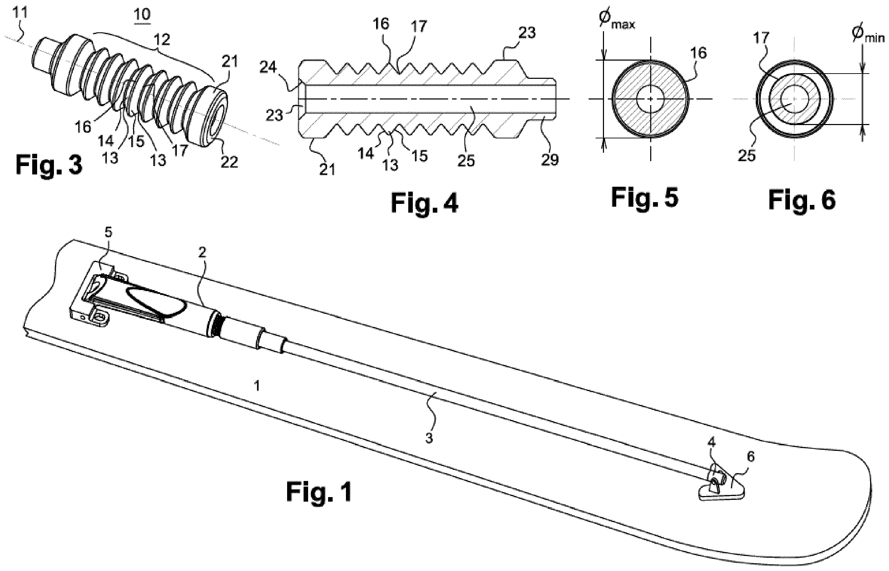

Comme illustré à la figure 1, le dispositif amortisseur **1** se compose principalement d'une tringle **3** formant le mécanisme de transmission des efforts, dont une extrémité **4** est destinée à être solidarisé à un point fixe de la planche de glisse, éventuellement par l'intermédiaire d'une pièce formant une liaison pivot **6,** située approximativement à quelques centimètres, typiquement de 2 à 4 cm, en arrière de la ligne de contact avant du ski. A son extrémité opposée, la tringle **3** pénètre dans un boîtier **2** et est reliée à un organe mobile **60.** Le boitier **2** incluant les pièces en matériau viscoélastique est lui-même articulé par une liaison pivot par rapport à une chape **5** destinée à être fixée à un point distant sur la surface supérieure de la planche. Dans des variantes non représentées, le boitier incluant les pièces en matériau viscoélastique peut être intégré dans une plaque de surélévation des éléments de la fixation, ou éventuellement être situé sous un des éléments de la fixation, voire entre éléments de la fixation.

La longueur de la tringle **3,** et donc le positionnement du boitier **2** peut dépendre du type de pratique envisagé. Ainsi, pour une pratique avec une évolution en grands virages, la tringle peut présenter une longueur de l'ordre de 40 à 50 cm. Pour une pratique avec des virages plus courts, typiquement en slalom, la tringle peut être plus courte, d'une longueur de l'ordre de 20 cm.

Plus précisément, et comme illustré à la figure 2, l'extrémité **4** de la tringle **3** présente un perçage **8** de réception d'un axe de pivotement solidaire d'une pièce non représentée montée sur la face supérieure de la planche. A son extrémité opposée, la tige **3** pénètre dans le boîtier de qui renferme deux éléments **10, 20** en matériau viscoélastique. La tringle **3** se prolonge par une pièce **30** qui coopère avec les deux éléments viscoélastiques **10,20,** selon un montage expliqué ci-après. La zone du boîtier **2** située à l'opposé de la tringle **3** présente une forme élargie, incluant un perçage transversal **9** de réception d'un axe de pivotement par rapport à la pièce **5** elle-même fixée sur la planche.

Comme illustré à la figure 3, la pièce en matériau viscoélastique **10** présente une forme de révolution, autour d'un axe longitudinal **11.** Cette pièce **10** comporte une partie centrale **12** composé d'une succession de motifs élémentaires **13** formés de deux régions tronconiques **14,15** reliées au niveau d'une zone circulaire **16** de plus fort diamètre, formant une crête définissant le diamètre extérieur maximal de la pièce **10.** Les motifs élémentaires **13** sont connectés les uns aux autres au niveau d'une zone circulaire **17** de plus faible diamètre, formant des creux et définissant le diamètre extérieur minimal de la pièce **10.** La pièce **10** comporte également deux portions d'extrémité. Une première portion **21** présente une forme cylindrique possédant un diamètre supérieur ou égal au diamètre des régions crénelées **13.** Cette région cylindrique **21** présente une face extrêmale **22** plane, destinée à recevoir l'appui du mécanisme de transmission des efforts. Cette face extrémale est percée en son centre d'une ouverture **23** prolongée par un canal central cylindrique **25.** Cette ouverture **23** présente une forme légèrement tronconique pour faciliter l'introduction du mécanisme de transmission. La pièce **10** comporte également une autre région d'extrémité **28** de forme sensiblement circulaire.

Plus précisément, la pièce en matériau viscoélastique **10** présente des sections transversales évolutives longitudinalement, alternativement croissante jusqu'à une section de diamètre maximal illustré sur la figure 5, et décroissante jusqu'à une section de diamètre minimal comme illustré sur la figure 6. Le diamètre maximal **Øₘₐₓ** est de l'ordre de 11mm et le diamètre minimal **Øₘᵢₙ** est de l'ordre de 8mm. Le diamètre **Øᵢₙₜ** du canal central est de l'ordre de 4mm. Dans la forme illustrée, la pièce **10** comporte 7 motifs élémentaires, s'étendant longitudinalement sur 21 mm Dans un exemple de réalisation particulier, le matériau choisi est à base de SEBS, présente une dureté 80 Shore A ou de 60 Shore D en fonction de la direction du mouvement à amortir.

Autrement dit, la pièce en matériau viscoélastique **10** présente une forme générale de type soufflet ou en accordéon. Cette forme donne à cette pièce une raideur non linéaire. En effet, dans une plage de petits déplacements lors de la compression de cette pièce, la raideur est faible, les soufflets n'étant pas encore jointifs. Puis, au-delà de ces petits déplacements, pour des déplacements supérieurs, la raideur augmente de 25 à 60% selon la forme choisie, à partir du moment où les soufflets commencent à être jointifs. Par conséquent, les extrémités du ski pourront se déformer et battre plus librement lors de petits déplacements, tandis que les grands débattements des extrémités du ski seront limités et rapidement arrêtés. A titre d'exemple, pour une pièce en matériau viscoélastique de dureté de 80 Shore A, la raideur plus faible correspond à des petits déplacements entre 0 et 4mm tandis que la raideur plus grande correspond à des déplacements plus grands supérieurs à 4mm, principalement entre 4 et 8mm.

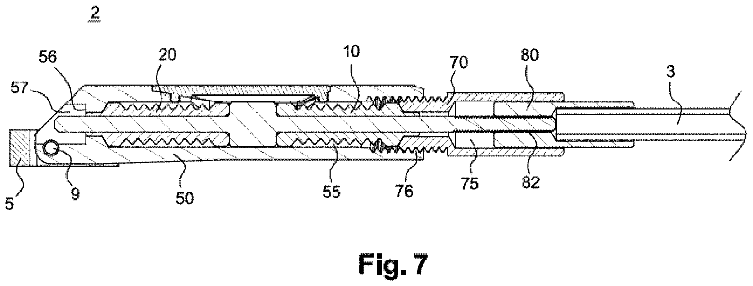

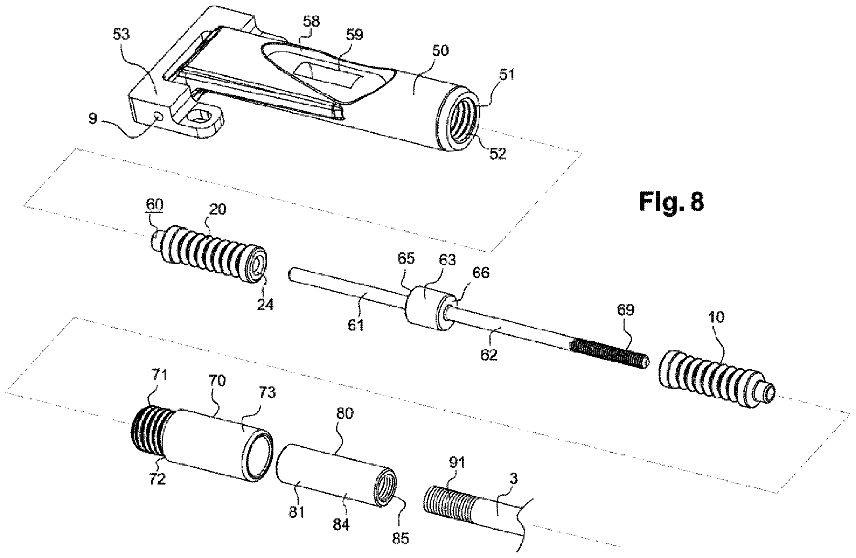

La manière dont les pièces en matériau viscoélastique sont mises en place à l'intérieur du dispositif d'amortissement est illustrée aux figures 7 et 8. Ainsi, le boîtier principal **2** comporte un corps **50** qui s'étend sensiblement longitudinalement, dans l'axe de la tringle **3.** Ce corps **50** présente une forme sensiblement cylindrique, et possède une ouverture **51** du côté orienté vers la tringle **3.** A l'opposé, le corps **50** présente des agencements **53** et en particulier un perçage transversal **9** permettant le montage d'un axe de pivotement par rapport à la chape **5** montée sur la face supérieure de la planche.

L'ouverture 51 permet de faire déboucher le logement cylindrique **55** à l'intérieur duquel peuvent coulisser les éléments qui sont introduits. Dans la forme illustrée, le corps **50** présente une zone transparente **58** sur la face supérieure, permettant de visualiser une partie des éléments qui sont contenus dans le boîtier **50,** au niveau d'une fenêtre **59.**

Les pièces en matériau viscoélastique **20,10** sont enfilées sur une tige **60,** qui présente deux portions **61,62** séparées par une région centrale de plus fort diamètre **63.** Les pièces en matériau viscoélastique **10, 20** sont mises en place chacune d'un côté de la région centrale **63.** A l'opposé de l'ouverture **51** du boîtier **2,** le logement cylindrique **55** se termine par un pan vertical, sur laquelle l'extrémité de moindre diamètre de la pièce **20** vient en butée. Ce pan vertical est percé en son centre pour laisser circuler librement l'extrémité de la tige **60** lors du fonctionnement du dispositif amortisseur. L'autre extrémité de la pièce en matériau viscoélastique **20,** et plus précisément sa face plane **22** vient au contact de la face en regard **65** de la portion centrale **63** de la tige **60.**

L'autre pièce en matériau viscoélastique **10** mise en place sur la portion **62** de la tige **60,** de sorte que sa face plane de sa portion de plus fort diamètre vient au contact de la face plane **66** de la portion centrale **63** de la tige **60.** Autrement dit, les pièces **10, 20** viennent en appui respectivement de part et d'autre de la portion centrale **63** de la tige **60** formant piston.

L'extrémité **51** du logement **55** est filetée, de manière à recevoir le filetage complémentaire **71** d'une première portion **72** de l'organe de fermeture **70.** Le vissage de la pièce **70** sur le boîtier **2** permet ainsi de régler la position extrémale par rapport au boîtier, de la face de la pièce élastomérique **10** opposée à portion centrale **63** de la tige **60.** La pièce **70** comporte également une portion élargie **73** à l'intérieur de laquelle peut-être insérer le manchon **80** monté en extrémité de la tringle **3.** Plus précisément, ce manchon **80** présente une première portion **81,** présentant un trou fileté **82** dans lequel est vissée l'extrémité **69** de la tige **60.** Le manchon **80** comporte également une portion **84** elle-même équipée d'un trou fileté **85 et** dans lequel est vissée l'extrémité **91** filetée de la tringle **3.** Aussi, la tringle **3, le** manchon **80** et la tige **60** sont solidarisés et se déplacent suivant un mouvement longitudinal commun. Dans une variante non représentée, la tige et la tringle peuvent former une pièce unique. L'évidement central **75** réalisé dans la pièce **70** présente des dimensions suffisantes pour permettre le débattement du manchon **80** lors des mouvements de la tringle **3.**

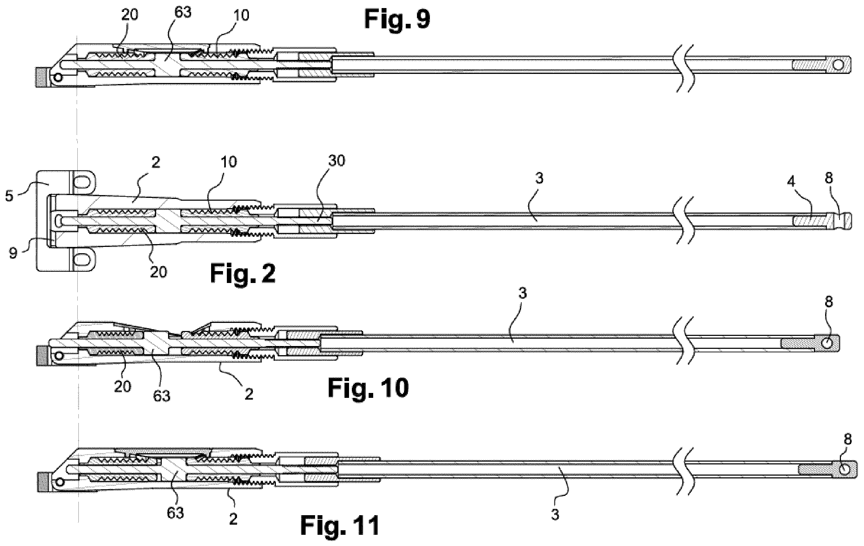

Le fonctionnement du dispositif peut être illustré par les positions occupées aux figures 9,10 et 11. Ainsi, dans la position de la figure 9, le système est au repos, et la planche n'est pas fléchie, et la portion centrale **63** de la tige **60** est dans une position intermédiaire, de telle sorte qu'aucun effort de compression n'est exercé sur les pièces en matériau viscoélastique **10,20.** Lorsque la planche subit un mouvement de flexion, correspondant à une remontée d'une de ses extrémités vers le haut, la tringle **3** se déplace de telle sorte que son point d'attache **8** se rapproche du boîtier **2.** Dans ce cas, par l'intermédiaire du manchon **80,** la tringle repousse la tige **60** à l'intérieur du boîtier **2**.La portion centrale **63** de la tige **60** exerce une poussée sur l'élément en matériau viscoélastique **20** situé au fond du boîtier **2,** en comprimant cet élément. Les phénomènes de cisaillement intervenant lors de la compression et la déformation de cet élément **20** conduisent à l'amortissement du mouvement de flexion de la planche.

A l'inverse, dans la configuration illustrée à la figure 11, correspondant à un mouvement de contre flexion, correspondant au retour de l'extrémité de la planche déplacée initialement vers le le haut, dans une direction vers le bas, en se rapprochant de l'état de repos de la planche, l'extrémité **8** de la tringle **3** s'éloigne du boîtier **2.** Dans ce cas, la tige **60** a tendance à sortir du boîtier **2,** et la portion centrale **63** vient au contact de la face plane de l'élément **10** située en regard. Dans ce cas, l'élément en matériau viscoélastique **10** se retrouve comprimé entre d'une part la portion centrale **63** de la tige, et d'autre part le bouchon formé par la pièce **70** obturant le logement **55.** De la même manière, les phénomènes de cisaillement intervenant lors de la compression et la déformation de cet élément élastomérique **10** conduisent à l'amortissement du mouvement de contre-flexion de la planche.

Bien entendu, en fonction des performances d'amortissement souhaitées, on choisira en conséquence les matériaux et les géométries des pièces en matériau viscoélastique. Il est bien entendu également possible de n'équiper le boîtier que d'un seul élément en matériau viscoélastique, si l'on souhaite amortir les mouvements uniquement dans une seule direction. De manière générale, et comme déjà évoqué, il peut être préférable d'amortir principalement les mouvements de flexion, les mouvements de contre flexion étant quant à eux faiblement voire pas amortis du tout. Dans ce dernier cas, la pièce en matériau viscoélastique est alors particulièrement rigide, et ne joue qu'un rôle de butée, et pourrait même être remplacée par une rondelle rigide, réduisant ainsi l'encombrement du boitier. Dans une autre variante de réalisation, les pièces en matériau viscoélastique pourraient être amovibles et interchangeables pour que l'utilisateur puisse choisir la dureté de ces pièces en fonction du comportement qu'il recherche sur la neige. En particulier la zone transparente pourrait être dans ce cas démontable.

Le dispositif conforme à l'invention possède de multiple avantages, et en particulier celui de présenter une raideur adaptée et non linéaire choisie afin d'obtenir une planche moins perturbée par les irrégularités du terrain, rendant les planche plus faciles à conduire. La forme et le matériau choisis pour la pièce en matériau viscoélastique déformable assurent un amortissement efficace tout en occupant un volume réduit.

## Revendications

1. Dispositif amortisseur (1) destiné à être monté sur une planche de glisse, comportant un organe mobile relié à un mécanisme (3) de transmission des efforts générés lors de la déformation de ladite planche, et incluant une pièce (10,20) en un matériau viscoélastique déformable, **caractérisé en ce que** ladite pièce (10,20) présente une forme dont la section dans un plan transversal varie longitudinalement de manière alternativement croissante et décroissante, formant des creux et des crêtes, la distance entre creux et/ou la distance entre crêtes variant lors de la déformation de ladite pièce, et **en ce que** la pièce (10,20) comporte un canal central (25) traversé par un élément (60) du mécanisme de transmission.

2. Dispositif selon la revendication 1, **caractérisé en ce que** la pièce (10,20) en matériau viscoélastique présente une forme de révolution.

3. Dispositif selon la revendication 1, **caractérisé en ce que** la section de la pièce (10,20) en matériau viscoélastique varie de manière linéaire entre deux extremums (16).

4. Dispositif selon la revendication 1, **caractérisé en ce que** la pièce en matériau viscoélastique (10,20) présente une dureté Shore comprise entre 60 et 90 Shore A.

5. Dispositif selon la revendication 1, **caractérisé en ce qu'**il comporte une seconde pièce (10,20) en un matériau viscoélastique dont la dureté est différente de la dureté la première pièce viscoélastique (20,10).

6. Dispositif selon la revendication 1, **caractérisé en ce que** le mécanisme de transmission des efforts inclut une tringle (3) reliée à un piston qui vient en butée contre une face de la pièce en matériau viscoélastique (10,20).

7. Dispositif selon la revendication 6, **caractérisé en ce qu'**il comporte un boitier (2) contenant au moins une pièce (10,20) en matériau viscoélastique déformable.

8. Dispositif selon la revendication 7, **caractérisé en ce que** le boitier (2) comporte une zone transparente (58) à l'aplomb de la pièce en matériau viscoélastique déformable.

9. Planche de glisse incluant un dispositif selon l'une des revendications précédentes, **caractérisée en ce que** la première pièce (20) se déforme lors de la flexion de la planche de glisse, et la seconde pièce (10) se déforme lors de la contre-flexion de la planche de glisse.

10. Planche de glisse selon la revendication 9, **caractérisé en ce que** la pièce (20) en matériau viscoélastique déformable se déformant lors de la flexion de la planche de glisse présente une dureté inférieure à celle de la pièce (10) en matériau viscoélastique déformable se déformant lors de la contre-flexion de la planche de glisse.

11. Planche de glisse selon la revendication 10, **caractérisée en ce que** la première pièce (20) en matériau viscoélastique possède une dureté comprise entre 60 et 90 Shore A, de préférence voisine de 80 Shore A, et **en ce que** la seconde pièce (10) en matériau viscoélastique présente une dureté supérieure à 60 shore D.

## Patentansprüche

1. Dämpfervorrichtung (1), die dazu bestimmt ist, auf einem Gleitbrett montiert zu werden, mit einem beweglichen Element, das mit einem Mechanismus (3) zum Übertragen der Kräfte verbunden ist, die während der Verformung der Platte erzeugt werden, und mit einem Stück (10, 20) aus einem verformbares viskoelastisches Material, **dadurch gekennzeichnet, dass** dieses Stück (10, 20) eine Form hat, deren Querschnitt in der Querebene in Längsrichtung abwechselnd zunimmt und abnimmt, und dabei Vertiefungen und Stege bildet, der Abstand zwischen den Vertiefungen und/ oder der Abstand zwischen den Stegen ändert sich während der Verformung dieses Stücks und dadurch dass das Stück (10, 20) einen zentralen Kanal (25) umfasst, durch den ein Element (60) des Übertragungsmechanismus hindurchführt.

2. Vorrichtung gemäß Anspruch 1, **dadurch gekennzeichnet, dass** das Stück (10, 20) aus viskoelastischem Material eine Drehform aufweist.

3. Vorrichtung gemäß Anspruch 1, **dadurch gekennzeichnet, dass** das Stück (10, 20) aus viskoelastischem Material sich linear zwischen zwei Extrempunkten (16) ändert.

4. Vorrichtung gemäß Anspruch 1, **dadurch gekennzeichnet, dass** das Stück (10, 20) aus viskoelastischem Material eine Shore- Härte zwischen 60 und 90 Shore A aufweist.

5. Vorrichtung gemäß Anspruch 1, **dadurch gekennzeichnet, dass** es ein zweites Stück (10, 20) aus viskoelastischem Material enthält, dessen Härte sich von der Härte des ersten viskoelastischen Stücks (20, 10) unterscheidet.

6. Vorrichtung gemäß Anspruch 1, **dadurch gekennzeichnet, dass** der Übertragungsmechanismus eine Stange (3) enthält, verbunden mit einem Kolben, der gegen eine Seite des Stücks (10, 20) aus viskoelastischem Material stößt.

7. Vorrichtung gemäß Anspruch 6, **dadurch gekennzeichnet, dass** es ein Gehäuse (2) enthält, dass mindestens ein Stück (10, 20) aus viskoelastischem Material enthält.

8. Vorrichtung gemäß Anspruch 7, **dadurch gekennzeichnet, dass** das Gehäuse (2) eine transparente Zone (58), lotrecht zum verformbaren Stück aus viskoelastischem Material, enthält.

9. Gleitbrett mit einer Vorrichtung gemäß irgendeinem der vorstehenden Ansprüche, **dadurch gekennzeichnet, dass** das erste Stück (20) sich bei der Biegung des Gleitbretts verformt und das zweite Stück (10) sich bei der Gegenbiegung des Gleitbretts verformt.

10. Gleitbrett mit einer Vorrichtung gemäß Anspruch 9, **dadurch gekennzeichnet, dass** das verformbare Stück (20) aus viskoelastischem Material, das sich bei der Biegung des Gleitbretts verformt, eine Härte aufweist, die geringer ist, als die des Stücks (10) aus viskoelastischem Material, das sich bei der Gegenbiegung des Gleitbretts verformt.

11. Gleitbrett gemäß Anspruch 10, **dadurch gekennzeichnet, dass** das erste Stück (20) aus viskoelastischem Material, eine Härte zwischen 60 und 90 Shore A aufweist, am besten um 80 Shore A, und dass das zweite Stück (10) aus viskoelastischem Material eine Härte von über 60 Shore D aufweist.

## Claims

1. Shock absorbing device (1) designed to be mounted to a sliding board, comprising a mobile device connected to a mechanism (3) transmitting the forces generated during the deformation of the said board and including a part (10,20) of a deformable viscoelastic material, **characterized in that** the said part (10,20) is shaped in such a way that its transversal section varies longitudinally in an increasing and decreasing manner, to form hollows and ridges, wherein the distance between the hollows and/or the distance between the ridges varies during the deformation of the said part, and **in that** the part (10, 20) comprises a central channel (25) through which an element (60) of the transmission mechanism passes.

2. Device according to claim 1, **characterized in that** part (10, 20) of viscoelastic material has a revolving shape.

3. Device according to claim 1, **characterized in that** the section of part (10, 20) of viscoelastic material varies linearly between two extremes (16).

4. Device according to claim 1, **characterized in that** the part (10, 20) of viscoelastic material has Shore hardness included between 60 and 90 Shore A.

5. Device according to claim 1, **characterized in that** it comprises a second part (10, 20) of viscoelastic material whose hardness is different from the hardness of the first viscoelastic part (20, 10).

6. Device according to claim 1, **characterized in that** the force transmission mechanism includes a linkage (3) connected to a piston which abuts against a face of the viscoelastic material part (10, 20).

7. Device according to claim 6, **characterized in that** it comprises a box (2) containing at least one part (10, 20) of deformable viscoelastic material.

8. Device according to claim 7, **characterized in that** box (2) includes a transparent zone (58) level with the part of deformable viscoelastic material.

9. Sliding board comprising a device according to one of the previous claims, **characterized in that** the first part (20) deforms when the sliding board flexes and the second part (10) deforms when the sliding board is counter-flexed.

10. Sliding board according to claim 9, **characterized in that** the deformable viscoelastic material part (20) deforms when the sliding board flexes and offers hardness less than that of the deformable viscoelastic material part (10) which deforms during the counter-flexing of the sliding board.

11. Sliding board according to claim 10, **characterized in that** the first part (20) of the viscoelastic material has hardness included between 60 and 90 Shore A, preferably near 80 Shore A, and **in that** the second part (10) of viscoelastic material has hardness in excess of 60 Shore D.
